# EUROPÄISCHE PATENTSCHRIFT

(11) **EP 1 290 706 B1**
(45) Veröffentlichungstag und Bekanntmachung des Hinweises auf die Patenterteilung: **01.10.2003**
(21) Anmeldenummer: 01936445.4
(22) Anmeldetag: 08.06.2001
(51) Int. Cl.: H01H 19/56, H01H 19/58, H01H 19/10

(54) **SCHALTER, INSBESONDERE CODIERSCHALTER**
SWITCH, ESPECIALLY A CODING SWITCH
COMMUTATEUR, NOTAMMENT COMMUTATEUR DE CODAGE

(30) Priorität: 15.06.2000 EP 20010405
(43) Veröffentlichungstag der Anmeldung: 12.03.2003
(73) Patentinhaber: Hartmann Codier GmbH & Co. KG, 91083 Baiersdorf (DE)
(72) Erfinder: KILIAN, Karl, 91083 Baiersdorf (DE); OTTO, Rainer, 96114 Hirschaid (DE)
(74) Vertreter: Tergau & Pohl Patentanwälte
(86) Internationale Anmeldenummer: EP0106521
(87) Internationale Veröffentlichungsnummer: WO01097240

(56) Entgegenhaltungen:
- DE-A- 3 922 710
- DE-U- 8 319 591
- US-A- 4 346 269
- US-A- 5 669 489

## Beschreibung

Die Erfindung bezieht sich auf einen Schalter, insbesondere einen für die Bestückung einer mit einem Anschlussraster versehenen Basisplatine einsetzbaren Codierschalter. Ein derartiger Codier- oder Codierdrehschalter ist beispielsweise aus der DE 31 36 045 C2 oder aus der DE 39 22 710 C2 bekannt.

Ein Codierschalter mit einer sogenannten BCD-Binärcodierung, deren Code-Muster eine 8-4-2-1-Codierung zugrundeliegt, weist eine Anzahl von um eine zentrale Drehachse eines Drehknopfs oder Drehrades konzentrisch angeordneten Leiterbahnen auf, denen gemäß der Codierung unterschiedliche Wertigkeiten zugeordnet sind. Die Leiterbahnen sind in eine Anzahl von Anschlüssen geführt, die ein an eine entsprechende Basisplatine, in die der Drehcodierschalter einsetzbar ist, angepasstes Anschlussraster führen oder bilden. Mittels des Drehrades kann die gewünschte Wertigkeit aus üblicherweise zehn oder sechzehn Drehstellungen ausgewählt werden. Dazu überstreicht ein mit dem Drehknopf gekuppelter Kollektor in einem durch die Codierung festgelegten Raster die Leiterbahnen oder Leiterzüge des Codierschalters und stellt zwischen diesen entsprechend der ausgewählten Wertigkeit eine elektrische Verbindung her. Auch kann die Codierung auf eine platinenartige Codierscheibe in Form von Leiterbahnabschnitten oder -zügen aufgedruckt sein. Als Wertigkeit wird die aus der Vielzahl der möglichen Codierungen ausgewählte oder eingestellte Binär- oder Hexadezimal-Zahl verstanden, die von dem stets gleichen Anschlussraster dargestellt oder repräsentiert wird.

Mittlerweile sind im Handel von der Hartmann Codier GmbH & Co. KG, vormals Hartmann Gerätebau GmbH & Co KG, hinsichtlich des Aufbaus unterschiedliche Drehcodierschalter ("Printhart") erhältlich, deren zweireihige Anschlussraster üblicherweise zwei sich auf den Längsseiten einer Rechteckform gegenüberliegende Anschlussreihen mit jeweils einer Anzahl von Anschlüssen aufweisen, z. B. mit jeweils drei Anschlüssen oder mit einem Anschluß in einer Reihe und mit vier Anschlüssen in der gegenüberliegenden Anschlussreihe. Bei dieser Konfiguration sind üblicherweise zwei sich gegenüberliegende Eingangsanschlüsse und vier Ausgangsanschlüsse vorgesehen, die in den Eckpunkten der Rechteckform positioniert sind. Diese Anschlussraster sind an die herkömmlichen einreihigen oder zweireihigen 2,54mm-Industrieraster von zu bestükkenden Basisplatinen angepasst. Mittels eines solchen Drehcodierschalters oder einer Anzahl von miteinander verknüpften Drehcodierschaltern können selektiv eine Anzahl von auf der Basisplatine vorgeprägten elektrischen Stromkreisen geschlossen oder unterbrochen werden.

Derartige Drehcodierschalter weisen bisher einen auf maximal sechzehn Einstellungen begrenzten Einstellbereich auf. Dabei sind den einzelnen Ausgangsanschlüssen die Grund-Wertigkeiten 1,2,4 und 8 zugeordnet, während die dazwischen liegenden Wertigkeiten 3, 5 und 7 sowie die Wertigkeiten von 9 bis 15, die inclusive der Wertigkeit 0 insgesamt sechzehn Schalterstellungen entsprechen, durch geeignete Kombination der Grund-Wertigkeiten entsprechend einer Codiermatrix realisiert werden.

Aufgrund der üblicherweise geringen Abmessungen derartiger Drehcodierschalter von 10mm x 10mm oder 12mm x 12mm sind infolge der dadurch bedingten engen Platzoder Raumverhältnisse höhere Wertigkeiten, beispielsweise bis zu einer Wertigkeit von 48 mit entsprechend 48 Schaltstellungen oder darüber hinaus, schon deshalb äußerst schwierig realisierbar, als die entsprechende Codierung sehr eng nebeneinander liegende Leiterbahn-und/oder Kollektorbahnabschnitte erfordert. Dabei kommt häufig erschwerend die Forderung hinzu, dass Falschwerte oder -stellungen mit undefinierten Wertigkeiten zu vermeiden sind. Derartige Falschwerte können zumindest kurzzeitig beim Übergang zwischen zwei Schalt- oder Einstellungen auftreten.

Der Erfindung liegt daher die Aufgabe zugrunde, einen besonders geeigneten Drehcodierschalter anzugeben, mit dem bei gleichzeitig möglichst geringen Abmessungen auch mehr als 16 Schalt- oder Einstellungen und damit entsprechend höhere Wertigkeiten realisierbar sind.

Diese Aufgabe wird erfindungsgemäß gelöst durch die Merkmale des Anspruchs 1. Vorteilhafte Ausgestaltungen und Weiterbildungen sind Gegenstand der Unteransprüche.

Der Schalter zeichnet sich einerseits dadurch aus, dass der oder jeder Eingangsanschluss als Rastelement ausgeführt ist, das nach Art eines Rastwerkes mit einem elektrisch leitend ausgeführten Rastkörper gekoppelt ist.. Dadurch entfallen üblicherweise zur Bewerkstelligung der definierten Schaltstellungen vorgesehene separate Rastelemente in Form eines mit einer im Kreis angeordneten Zahnung versehenen Rotorelementes und einer mit diesem zusammenwirkenden Rastfeder oder in Form eines Teilungsrades, dessen federnde Rastelemente in eine entsprechende Gehäusezahnung eingreifen.

Die Eingangsanschlüsse, an denen ein z. B. entsprechend einer jeweils eingestellten Wertigkeit über die Ausgangsanschlüsse des Drehcodierschalters weiterzuführendes Strom- oder Spannungssignal ansteht, weisen somit eine Doppelfunktion auf. So dienen diese einerseits als Rastelement und andererseits als Kontaktierungselement. Auch weist der um eine Zentralachse drehbare Rastkörper eine Doppelfunktion auf. Danach wirkt dieser einerseits mit den Rastelementen nach Art eines Rastwerkes zusammen und dient andererseits als Träger einer Codierungsmatrix, deren Spalten- und Zeilenwerte die jeweilige Belegung der Ausgangsanschlüsse und somit die vom Codierschalter in den einzelnen Schaltstellungen jeweils abzugebende Wertigkeit festlegt.

Ein weiterer Aspekt des Codierschalters ist das elektrische Zusammenwirken des oder jedes als Eingangsanschluss ausgebildeten Rastelements mit dem Rastkörper. So ist zusätzlich zu deren mechanischen Zusammenwirken vorgesehen, dass das oder jedes Rastelement nur in der jeweils definierten Schaltstellung eine elektrische leitende Verbindung zum Rastkörper aufweist. In den dazwischen liegenden Stellungen des Drehknopfes des Drehcodierschalters ist der auf den Rastkörper übertragene Eingangsoder Eingabewert stets Null, auch wenn am entsprechenden Eingangsanschluss das Eingangssignal kontinuierlich anliegt oder ansteht. Dazu sind entweder lediglich die zwischen zwei Rastzähnen liegenden Rastausnehmungen des Rastkörpers elektrisch kontaktierend ausgeführt, während dann die Rastzähne im Bereich der Zahnkämme eine Isolierung aufweisen. Auch ist eine Invertierung der alternierenden Kontakt- und Isolationsflächen möglich, indem lediglich die Zahnkämme des Rastkörpers elektrisch kontaktierend ausgeführt sind, während in den Rastausnehmungen keine elektrische Kontaktierung vorliegt. Durch die rastwerkartige Ausführung ist somit sichergestellt, dass zwischen zwei Rast- oder Endstellungen und damit zwischen zwei Schaltstellungen an allen Ausgangsanschlüssen die Wertigkeit 0 vorliegt.

Um bei höheren Wertigkeiten, z.B. bei einer maximalen Wertigkeit von 48 oder 64 mit einer entsprechenden Anzahl von Schaltstellungen, eine zu enge Zahnung des Rastwerkes zu vermeiden, liegen zweckmäßigerweise zwei Zahnreihen entlang der Drehachse übereinander. Dabei sind die beiden Zahnreihen kammartig zueinander versetzt angeordnet, wobei jede Zahnreihe mit einem als Eingangsanschluss ausgeführten Rastelement zusammenwirkt. Bei 48 Wertigkeiten und somit bei 48 Schaltstellungen ergibt sich daher hinsichtlich jeder der beiden Zahnreihen auf einem Kreisumfang eine Zahnteilung im Bogenmaß von 15°. Demgegenüber wären bei einer einzelnen Zahnreihe für 48 Schalterstellungen eine vergleichsweise enge Zahnteilung im Bogenmaß von 7,5° notwendig.

In einer besonderen Ausgestaltung des Rastkörpers ist dieser als zylinderförmiger Walzenkörper ausgeführt, der in Umfangsrichtung entsprechend einer Codierungsmatrix mit mit kontaktlosen Abschnitten alternierende Kontaktflächen aufweist. Zu diesen sind die vorzugsweise als Schleifkontakte ausgeführten Ausgangsanschlüsse positioniert. Dabei kann der Rastkörper aus einer Anzahl von zylinderförmigen Walzenscheiben gebildet sein, zu denen dann vorzugsweise jeweils zwei Schleifkontakte oder Kontaktelemente positioniert sind. Diese Kontaktelemente stehen in axial unterschiedlichen Höhen und damit nebeneinander am Außenumfang des Walzenkörpers mit diesem bzw. mit der jeweiligen Walzenscheibe in Wirkeingriff.

Der Wirkeingriff ist - entsprechend der dem jeweiligen Ausgangsanschluss zugeordneten Grund-Wertigkeit - vorzugsweise durch alternierende Isolations- und Kontaktflächen ausgeführt. Insbesondere bei der Scheibenausführung des Walzenkörpers kann jedoch die oder jede Walzenscheibe umfangsseitig ebenfalls mit einer Zahnung versehen sein. Dabei dienen lediglich die Zahnkämme als Kontaktflächen für die als Rastelemente ausgeführten Ausgangsanschlüsse, während die dazwischen liegenden Zahnausnehmungen derart bemessen sind, dass in entsprechend gegenüberliegender Position das jeweilige Rastelement keinen mechanischen und somit keinen elektrischen Kontakt zur jeweiligen Walzenscheibe aufweist. Durch die Scheibenbauweise lässt sich letztendlich eine beliebig hohe Wertigkeit realisieren, wobei dann lediglich die Höhe des Codierschalters nicht jedoch seine Abmessung hinsichtlich der Breite und der Länge zunimmt. Die Codierung kann auf der Oberseite, der Unterseite oder am Umfang der oder jeder Walzenscheibe angebracht oder aufgetragen sein, wobei dann die mit den Ausgangsanschlüssen einstückigen Schleifkontakte entsprechend ausgebildet und positioniert bzw. angeordnet sind.

Nachfolgend werden Ausführungsbeispiele der Erfindung anhand einer Zeichnung näher erläutert. Darin zeigen:
- Fig. 1: schematisch in einer perspektivischen Darstellung einen Schalter mit walzenförmigem Rastkörper und als Rastelemente bzw. Schleifkontakte ausgebildeten Anschlusspins,
- Fig. 2: den Schalter gemäß Fig. 1 in einer Vorderansicht,
- Fig. 3 bis 5: unterschiedliche Schnittdarstellungen des Schalters gemäß Fig. 1,
- Fig. 6: eine Wertigkeitsmatrix für einen 48-stelligen Schalter,
- Fig. 7: in einer Ansicht gemäß Fig. 2 einen 64-stelligen Schalter,
- Fig. 8: eine Wertigkeitsmatrix für einen 64-stelligen Schalter, und
- Fig. 9: die auf den Rastkörper umfangsseitig aufgebrachte Wertematrix gemäß Fig. 8.

Einander entsprechende Teile sind in allen Figuren mit den gleichen Bezugszeichen versehen.

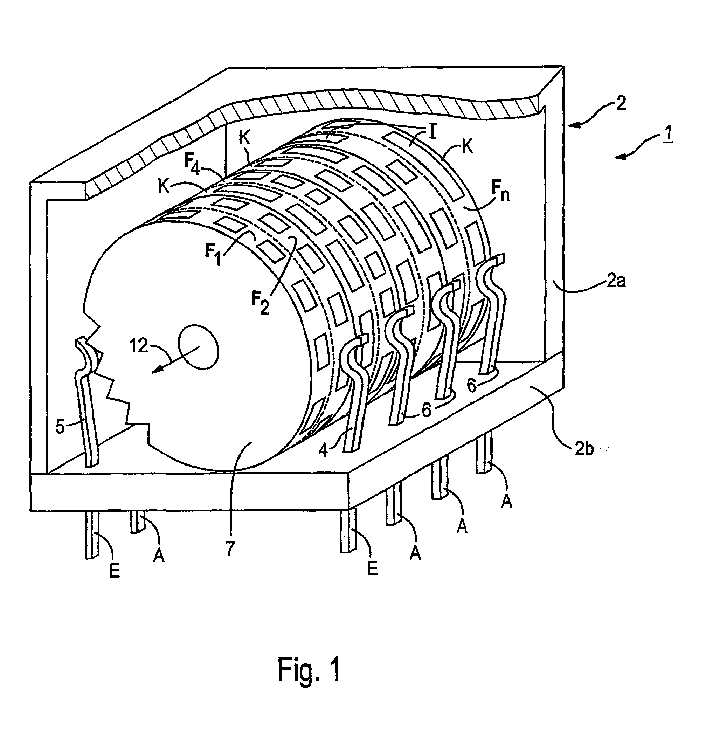

Der Schalter oder Codierschalter gemäß Fig. 1 umfasst ein Gehäuse 2 mit einem Gehäusedeckel 2a und einem Gehäusegrundkörper 2b, durch den Anschlusspins E,A hindurch nach außen geführt sind. Dabei sind zweckmäßigerweise zwei Eingangspins oder Eingangsanschlüsse E und insgesamt sechs Ausgangsanschlüsse oder Ausgangspins A vorgesehen. Die Eingangspins E sind als Rastelemente 4,5 ausgebildet. Die Ausgangsanschlüsse A sind vorzugsweise als Schleifkontakte 6 ausgeführt. Die Anschlüsse E,A stehen gehäuseintern mit einem walzenartigen Rastkörper 7 in Wirkverbindung. Der vorzugsweise zylinderförmige Rastkörper 7 weist eine der Anzahl der Anschlüsse E, A entsprechende Anzahl von Funktionsebenen Fₙ auf, die in Achsrichtung 12 hintereinander angeordnet sind oder übereinander liegen.

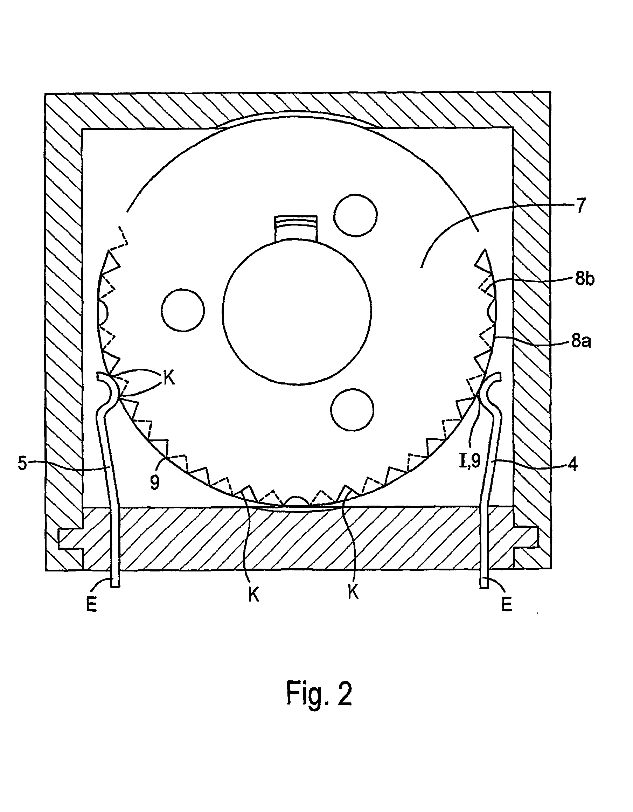

Die Wirkverbindung zwischen den Eingangsanschlüssen E und dem Rastkörper 7 ist vorzugsweise sowohl mechanischer als auch elektrischer Art. Die mechanische Wirkverbindung ist dadurch bewerkstelligt, dass der walzenförmige Rastkörper 7 - im Positionsbereich mit den vorzugsweise als einstückige Verlängerung der Eingangsanschlüsse E ausgeführten Rastelementen 4,5 - mit einer entsprechend der Zylinderform des Rastkörpers 7 kreisförmigen und umfangs- oder kantenseitig vorgesehenen Zahnungen 8a,8b versehen ist. Dabei sind die Zahnungen 8a,8b kammartig gegeneinander versetzt, wie dies insbesondere aus der Fig. 2 ersichtlch ist. Jede Zahnung weist bei einem z. B. 48-stelligen Drehcodierschalter 1 eine Zahnteilung im Bogenmaß von 15° auf.

Eine Schaltstellung ist bewirkt, wenn eines der Rastelemente 4,5 in eine Zahnausnehmung zwischen zwei Rastzähnen der Zahnung 8a oder 8b eingreift. In dieser Stellung-die in Fig. 2 anhand des Eingriffs des Rastelements 5 in die Zahnung 8b ersichtlich ist-ist zusätzlich eine elektrische Kontaktierung oder Verbindung zwischen dem Rastelement 5 und somit dem Eingangsanschluss E und dem Rastkörper 7 hergestellt. Demgegenüber ist in den Zwischenstellungen, die in Fig. 2 anhand der Stellung des Rastelementes 4 bezüglich der Zahnung 8a ersichtlich ist, keine elektrische Kontaktierung vorgesehen. Dies wird vorzugsweise dadurch erreicht, dass die Zahnkämme mit einem Isoliermaterial 9 versehen sind. Die beiden im Ausführungsbeispiel gemäß Fig. 1 vorderen oder oberen Funktionsebenen F₁,F₂ des Rast- oder Walzenkörpers 7 sind den beiden Eingangsanschlüssen E und somit den beiden Rastelementen 4,5 zugeordnet.

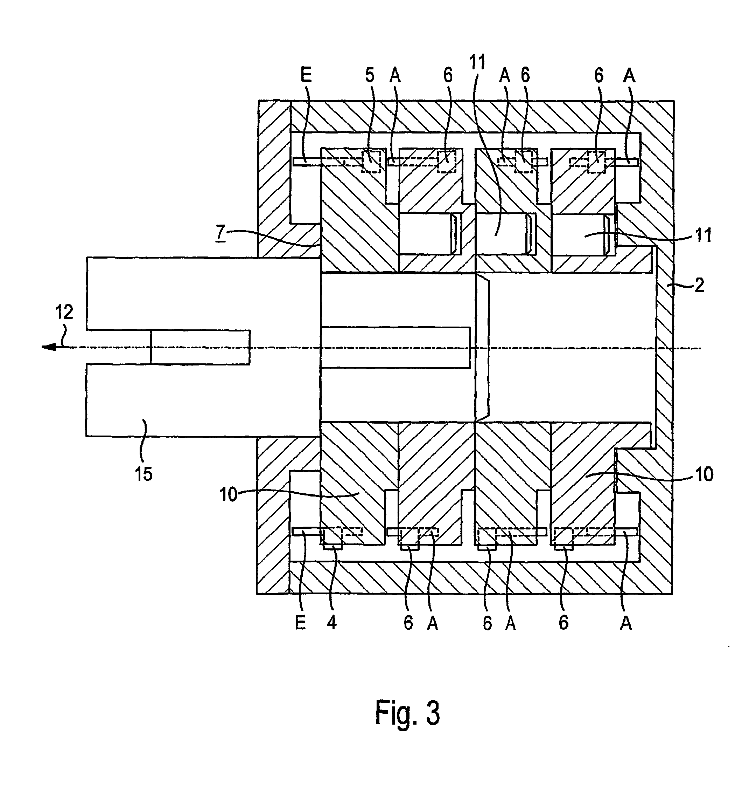

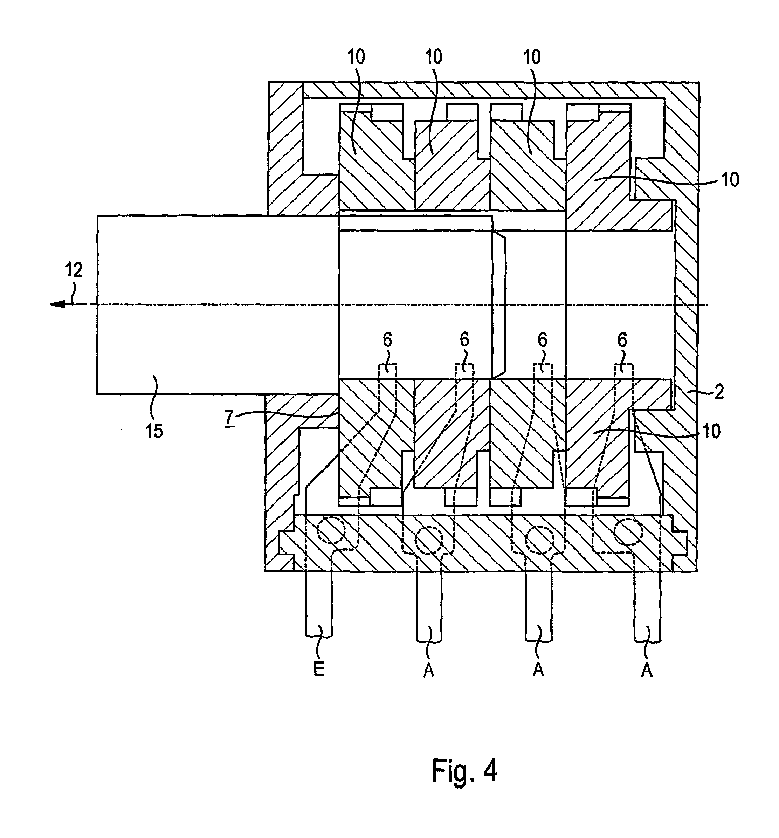

Auch die Schleifelemente bzw. -kontakte 6 der Ausgangsanschlüsse oder -pins A sind zur Herstellung einer Wirkverbindung mit dem Rastkörper 7 in einer bestimmten Art und Weise positioniert. Grundsätzlich ist jedem der Schleifelemente bzw. -kontakte 6 der Ausgangsanschlüsse A eine der weiteren Funktionsebenen F₃ bis Fₙ zugeordnet. Dies ist insbesondere aus den Figuren 3 und 4 ersichtlich. Dazu ist der Rastkörper 7 in der dort dargestellten Ausführungsform aus einer Anzahl von Walzenscheiben 10 aufgebaut, wobei jeder Walzenscheibe 10 vorzugsweise zwei Rast- oder Schleifelemente 4 und somit entsprechend zwei Ausgangsanschlüsse A zugeordnet sind. Auch können jeder Walzenscheibe 10 ein einzelner oder mehrere Ausgangsanschlüsse A zugeordnet sein.

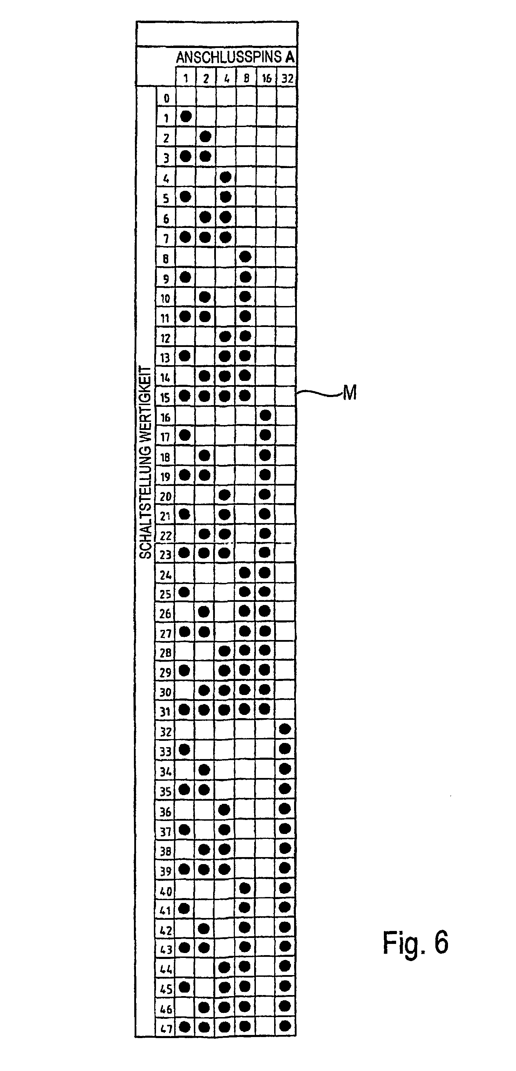

Die vorzugsweise diametral gegenüberliegenden Schleifelemente 6 sind - ebenso wie die Rastelemente 4 der Eingangsanschlüsse E - in Achsrichtung 12 in unterschiedlicher Höhe und somit zueinander versetzt angeordnet. Dazu trägt jede Scheibe 10 zwei Codierungen entsprechend der in Fig. 6 dargestellten Codiermatrix M. Dort sind an den Spalten die Grund-Wertigkeiten (1,2,4,8,16,32) und damit die Grund-Belegung der Ausgangsanschlüsse oder Anschlusspins A abgetragen, während an den Zeilen die Schaltstellungen und damit die Wertigkeiten (0 bis 47) abgetragen sind. Die schwarzen Punkte in den einzelnen Feldern der Matrix M geben die Belegung oder das Belegungsmuster der Anschlusspins A wieder.

So ist beispielsweise bei der Wertigkeit (1) und damit bei der Schalterstellung (1) lediglich einer der Anschlusspins A belegt. Dies bedeutet, dass bei dieser Schalterstellung einerseits der entsprechende Anschlusspin A mit der diesem zugeordneten Scheibe 10 elektrisch leitend verbunden und somit mit dieser kontaktiert ist. Andererseits ist eines der Rastelemente 4,5 durch entsprechenden Eingriff in die Zahnung 8a bzw. 8b mit dem Rast- oder Walzenkörper 7 elektrisch leitend verbunden. Ein dem entsprechenden Eingangsanschluss E zugeführtes Strom- oder Spannungssignal wird somit über das Rastelement 4 oder 5 und den Rastkörper 7 sowie über das jeweilige Rast- oder Schleifelement 6 des entsprechenden Ausgangsanschlusses A an diesen weitergeführt. Analog sind z.B. bei der Wertigkeit (15) insgesamt vier Schleifkontakte 6 kontaktiert und somit die entsprechenden Ausgangsanschlüsse A belegt. Dabei gelangt ein Strom- oder Spannungssignal, das über den entsprechenden Eingangsanschluss E in Raststellung des jeweiligen Rastelementes 4 oder 5 mit der entsprechenden Zahnung 8a bzw. 8b der diese tragenden Scheibe 10 an den Rastkörper 7 und von diesem wiederum an die Rast- oder Schleifelemente 6 übertragen wird, an die jeweiligen Ausgangsanschlüsse A.

Aus der Codiermatrix M ist ersichtlich, dass der der Wertigkeit (1) zugeordnete Ausgangsanschluss A praktisch bei jeder zweiten Wertigkeit belegt ist. Entsprechend diesem Muster des der Wertigkeit (1) zugeordneten Anschlusspins A ist die zugehörige Walzenscheibe 10 mit Kontaktflächen K und Isolierflächen I ausgestaltet, wie insbesondere aus Fig. 1 ersichtlich ist. Die entsprechende Codierung kann auch auf der Ober- und/oder Unterseite der jeweiligen Scheibe 10 angebracht sein. Die Schleifkontaktierung ist dann dementsprechend ausgebildet.

Vorzugsweise ist die entsprechende Codierung jedoch an der Umfangs- oder Kantenseite der jeweiligen Walzenscheibe 10 angebracht. Diese Codierung kann in Form von alternierenden Kontakt- und isolationsflächen ausgeführt sein. Vorzugsweise ist jedoch eine zahnartige Außenkontur vorgesehen, wobei das entsprechende Rast- oder Schleifelement 6 lediglich bei durch die entsprechende Schalterstellung in Übereinstimmung gebrachter Zahnung 14 der Walzenscheibe 10 mit dieser elektrisch kontaktiert ist.

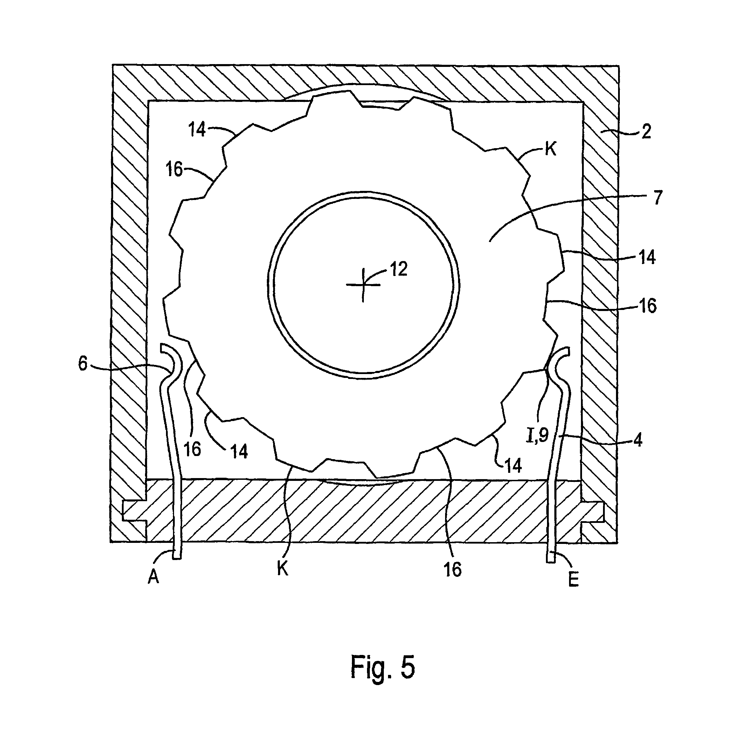

Wie aus Fig. 5 ersichtlich ist, ist in den zwischen den Zähnen der Zahnung 14 liegenden Ausnehmungen 16 die Position und Auslenkung des federnden Rast- oder Schleifelements 6 derart, dass keine elektrische Kontaktierung mit der Walzenscheibe 10 oder der entsprechenden Funktionsebene des Rastkörpers 7 hergestellt ist. Analog bildet jeder Bereich einer Walzenscheibe 10, dem ein Rastelement 4,5 eines Eingangsanschlusses E oder ein Schleifkontakt 6 eines Ausgangsanschlusses A hinsichtlich einer mechanischen und/oder elektrischen Wirkverbindung zugeordnet ist, eine Funktionsebene Fₙ des Rastkörpers 7.

Die in Fig. 5 dargestellte Walzenscheibe 10 zeigt die Codierung des Anschlusspins A mit der Wertigkeit (2). Aus der Codiermatrix M ist ersichtlich, dass dieser Anschlusspin A mit der Wertigkeit (2) stets bei zwei aufeinanderfolgenden Wertigkeiten belegt ist, wobei dazwischen jeweils ebenfalls zwei Wertigkeiten liegen, die nicht belegt oder nicht zu belegen bzw. abzufragen sind. Mit zunehmender Grund-Wertigkeit (1,2,4,8,16,32) der Anschlusspins A ist die Abfolge von Wertigkeitsgruppen mit einer Belegung bzw. einer Nicht-Belegung des entsprechenden Anschlusspins A zunehmend gröber. Dies bedeutet, dass mit zunehmender Grund-Wertigkeit die entsprechenden Kontaktflächen K an oder auf der jeweiligen Walzenscheibe 10 einen zunehmend größer werdenden Umfangsbereich umfassen. Dementsprechend weisen die zugehörigen Walzenscheiben 10 umfangsseitig eine mit zunehmender Grund-Wertigkeit abnehmende Anzahl von Kontaktzähnen 14 bzw. Ausnehmungen 16 auf.

Prinzipiell stehen bezüglich der einzelnen Walzenscheiben 10 des Rast- oder Walzenkörpers 7 zur Kontaktgabe die Ober- und Unterseite sowie die Außenwandung zur Verfügung. Die Kontaktierung der einzelnen Anschlusspins E,A ist aufgrund deren Ausbildung als Rastelemente 4,5 bzw. Rast- oder Schleifkontakte 6 sowohl hinsichtlich der elektrischen Kontaktierung als auch der mechanischen Rastung punktuell. Auch ist eine gegenüber der beschriebenen Ausführungsart invertierte Codierung der einzelnen Walzenscheiben-Zahnungen möglich.

Der walzenförmige Rastkörper 7 ist im Gehäuse um die zentrale Drehachse 12 gelagert und geführt. Dies ist insbesondere aus den Figuren 3 und 4 ersichtlich. Die gemäß dem Ausführungsbeispiel insgesamt lediglich vier Walzenscheiben 10 ermöglichen die Kontaktierung von insgesamt acht Anschlusspins E,A, nämlich zwei einer ersten Walzenscheibe 10 zugeordnete Eingangsanschlüsse E und sechs den drei weiteren Walzenscheiben 10 zugeordnete Ausgangsanschlüsse A. Die Rast- und Schleifelemente 4 bis 6 sind vorzugsweise bezüglich deren Form gleichartig ausgebildet. Die einzelnen Walzenscheiben 10 können durch Stifte 11 (Fig. 3) miteinander verbunden sein.

Bei dieser Ausführungsform besteht der Rastkörper 7 aus elektrisch leitendem Material. Lediglich entsprechend der Zahnung 8a,8b und entsprechend der Codierungsmatrix M erforderliche Flächenabschnitte der einzelnen Funktionsebenen Fₙ des Rastkörpers 7, der gemäß Fig. 1 auch als einzelner oder durchgehender Walzenkörper ausgeführt sein kann, sind als Isolierflächen I am oder auf dem Rastkörper 7 ausgeführt. Diese Isolierflächen I können beispielsweise durch einen isolierenden Farbanstrich realisiert sein. Innerhalb der oder jeder Funktionsebene Fₙ liegen oder verbleiben somit die Kontaktflächen K zwischen den Isolierflächen I, wie dies in Figur 1 anhand des dort dargestellten einteiligen oder einstückigen Rast- oder Walzenkörpers 7 mit glatter oder unverzahnter Außenwandung zumindest im Positions- oder Wirkbereich der Ausgangsanschlüsse A bzw. der Schleif- und/oder Rastkontakte 6 veranschaulicht ist. Umgekehrt sind gemäß der Codierung nach der Matrix M zwischen den Kontaktflächen K die Isolierflächen I angeordnet. Bei Ausführung des Rastkörpers 7 als gezahnte Walzenscheiben 10 oder Walzenscheibenebenen bzw. -abschnitte, insbesondere gemäß Figur 5, sind die Kontaktflächen K durch die Zahnaußenkanten 14 gebildet, während die Isolierflächen I durch die Ausnehmungen 16 gebildet sind, die mit oder ohne zusätzlichen Isolationsanstrich ausgeführt sein können.

Beim Betätigen eines mit dem Rastkörper 7 gehäuseintem gekoppelten Drehknopfes 15 (Figuren 3 und 4) wird der Rast- oder Walzenkörper 7 in Rotationsbewegung um die Drehachse 12 versetzt und rastet aufgrund des rastwerkartigen Zusammenwirkens der Rastelement 4,5 mit dem Rastkörper 7, d. h. mit dessen den Eingangsanschlüssen E zugeordneten Funktionsebenen F_{1,2} in jeder Schalt- oder Schalterstellung ein. Dabei ist nur in jeder Einraststellung der Rastelemente 4,5 eine Kontaktierung oder elektrisch leitende Verbindung von den Eingangsanschlüssen E zum Rastkörper 7 hergestellt. In den Zwischenstellungen ist keine Kontaktierung gegeben, so dass dort die Wertigkeit Null (0) definiert ist und fehlerfrei vorliegt.

Im Zuge der Drehung des Rastkörpers 7 werden zudem die Kontaktflächen K und die Isolierflächen I der jeweiligen Funktionsebene Fₙ vom entsprechenden Rast- oder Schleifkontakt 6 des zugehörigen Ausgangsanschlusses A überstrichen. Dabei werden aufgrund der entsprechend der Matrix M festgelegten, angeordneten und/oder an oder auf dem Rastkörper 7 positionierten Kontakt- und Isolierflächen K bzw. I die Wertigkeiten (1 bis 47) zur bestimmungsgemäßen Wertigkeitsabfrage oder -weiterleitung über eine mit dem Drehcodierschalter 1 bestückte (nicht dargestellte) Basisplatine an den jeweiligen Ausgangsanschlüssen A eingestellt.

Durch die rastelementartige Ausführung der die Strom- oder Spannungszufuhr bewerkstelligenden Eingangsanschlüsse E einerseits sowie die entsprechende Ausbildung des Rastkörpers 7 andererseits ist gewährleistet, dass keine Falschwerte auftreten können, da in den Schalterzwischenstellungen des damit gebildeten Rastwerkes stets die Wertigkeit Null (0) definiert vorliegt. Durch diese Ausbildung als Rastwerk werden zusätzliche Rotorelemente und Kontaktelemente vermieden und eingespart, so dass insgesamt ein den üblichen Abmessungen von 10mm x 10mm oder 12mm x 12mm entsprechender Codierdrehschalter mit weit mehr als den bisher üblichen Schaltstellungen und Wertigkeiten hergestellt werden kann.

Durch die Codierung in Form der durch die Codiermatrix M festgelegten oder vorgenommenen Anordnung oder Verteilung von Kontaktflächen K und Isolierflächen I an der Umlaufkante und/oder auf der Ober- oder Unterseite des elektrisch leitend ausgeführten und in Funktionsebenen Fₙ unterteilten Rastkörpers 7 ist letztendlich überall eine Kontaktgabe möglich. Die Codierung wird dann durch Auf- oder Anbringen von elektrisch nicht-leitenden oder isolierenden Rastkörper- bzw. Funktionsebenenabschnitten realisiert. Die Isolierung I kann in Form von Flächenanstrichen oder in Form von Ausnehmungen realisiert sein, die eine elektrische und ggf. auch eine mechanische Verbindung des entsprechenden Anschlusses E,A mit dem Rastkörper 7 zuverlässig sowie in einfacher Art und Weise verhindert.

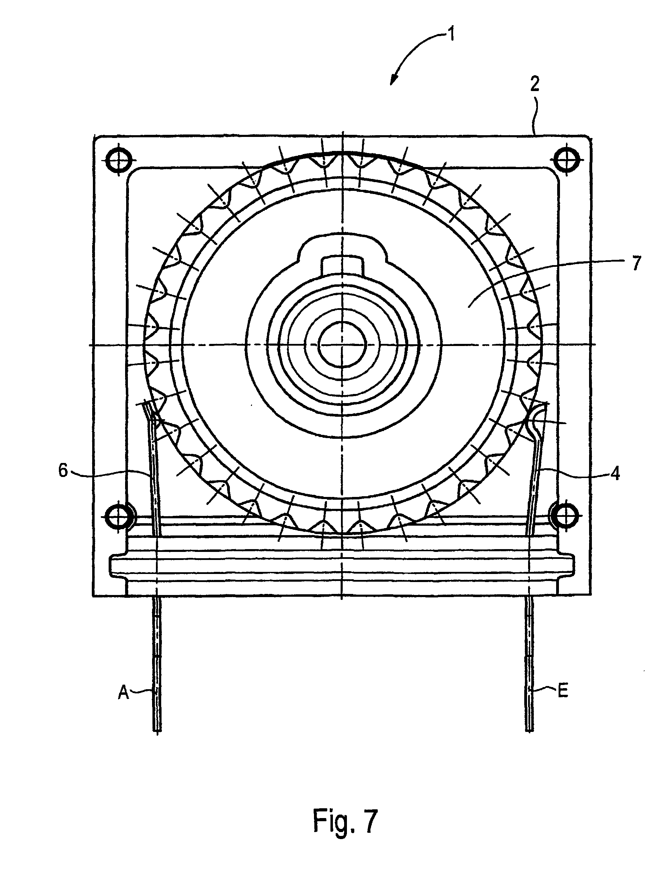

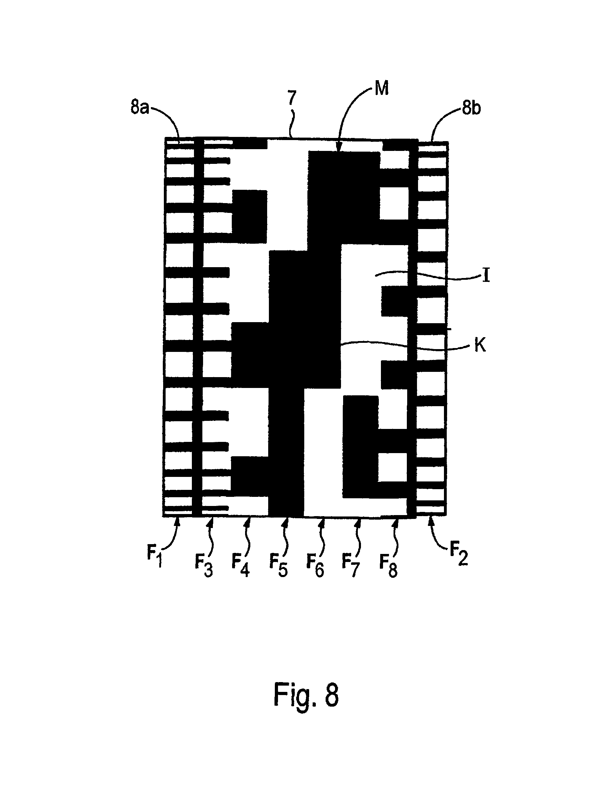

Die Figuren 7 bis 9 zeigen eine bevorzugte Ausführungsform eines 64-stelligen Schalters 1, dessen den beiden Eingangsanschlüssen oder -pins E zugeordneten Funktionsebenen F₁ und F₂ wiederum als Zahnkränze oder Zahnung 8a bzw. 8b ausgeführt sind. Bei dieser Ausführungsform sind die beiden Zahnkränze 8a und 8b an den gegenüberliegenden Außen- oder Stirnseiten des Rast- oder Walzenkörpers 7 vorgesehen. Die Zahnungen 8a und 8b sind wiederum gegeneinander versetzt, wobei jeder Zahnkranz 8a und 8b jeweils zweiunddreißig (32) Zähne oder Zahnkämme umfasst. In Figur 7 ist auf der rechten Figurenseite einer der Eingangsanschlüsse E mit dem diesem zugeordneten Rastelement 4 sichtbar, während auf der linken Figurenseite ein Ausgangsanschluss A mit dem diesem zugeordneten Schleifkontakt oder -element 6 sichtbar ist.

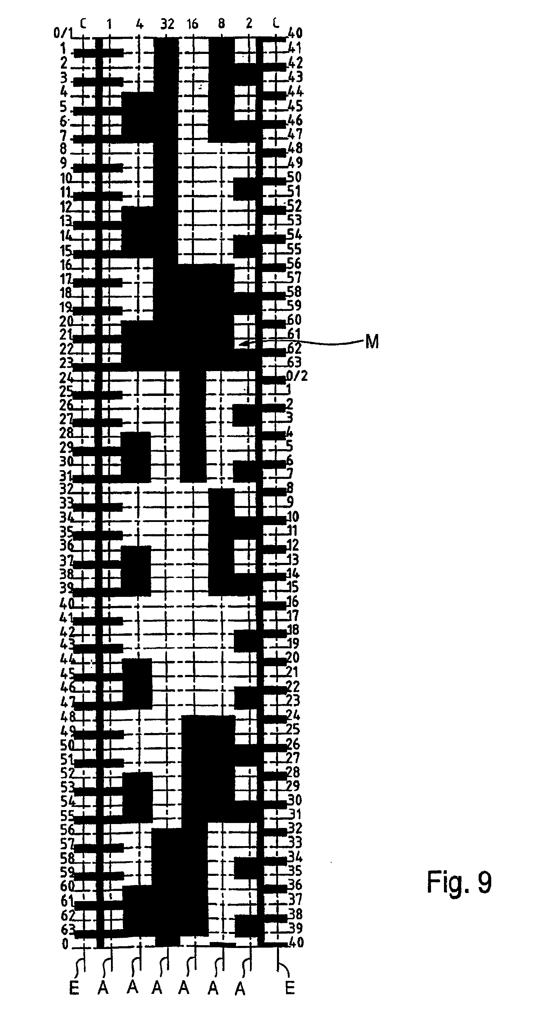

Der in diesem Ausführungsbeispiel einteilig oder einstückig ausgeführte Rastkörper 7 besteht selbst aus einem nicht-leitenden Material und trägt umfangsseitig eine vollflächig schwarz dargestellte Kontaktfläche K entsprechend der Codiermatrix M gemäß Figur 9. Lediglich diese schwarz hinterlegten Flächen sind somit Kontaktflächen K, während der vollflächig weiß dargestellte Flächenbereich Isolierfläche I ist. Bei dieser Ausführungsform sind dabei die Zahnkämme der Zahnungen 8a und 8b elektrisch leitend ausgeführt, während die dazwischen liegenden (weißen) Zahnungstäler oder Ausnehmungen durch das nicht-leitende Material des Rastkörpers 7 gebildet sind. Somit bewirkt stets einer der Eingangsanschlüsse E mit dessen Rastelement 4,5 eine Verrastung des Rastkörpers 7, während dann der andere Eingangsanschluss E mit dessen Rastelement 5 bzw. 4 an einem Zahnkamm positioniert und mit der Kontaktfläche K elektrisch leitend verbunden ist. Ein an diesem Eingangsanschluss E anstehendes Signal wird somit über den jeweiligen Zahnkamm der entsprechenden Zahnung 8a oder 8b und die Kontaktierungsfläche K im Bereich der entsprechenden Funktionsebene F₃ bis F₈ an den jeweiligen Ausgangsanschluss A übertragen.

### Bezugszeichenliste

- 1: Codierschalter
- 2: Gehäuse
- 2a: Gehäusedeckel
- 2b: Gehäusegrundkörper
- 4,5: Rastelement
- 6: Schleifkontaktl-element
- 7: Rastkörper
- 8a,b: Zahnung
- 9: Isoliermaterial
- 10: Scheibe
- 11: Stift
- 12: Achsrichtung
- 14: Zahnung
- 16: Ausnehmung

- A: Ausgangsanschluss/-pin
- E: Eingangsanschluss/-pin
- Fₙ: Funktionsebene
- I: Isolierfläche
- K: Kontaktfläche
- M: Codiermatrix

## Patentansprüche

1. Schalter, insbesondere Codierschalter, mit einem um eine Drehachse (12) drehbaren Rastkörper (7) zur Einstellung einer Vielzahl von Schalterstellungen, und mit mindestens einem Eingangsanschluss (E) sowie einer Anzahl von Ausgangsanschlüssen (A), **dadurch gekennzeichnet, dass**
- der Eingangsanschluss (E) als mit dem Rastkörper (7) gekoppeltes Rastelement (4,5) ausgebildet ist, und
- dass der Rastkörper (7) derart elektrisch leitend ausgeführt ist, dass über diesen in jeder Raststellung entsprechend der eingestellten Schaltstellung zwischen dem Eingangsanschluss (E) und dem jeweiligen Ausgangsanschluss (A) eine elektrische Verbindung hergestellt ist.

2. Schalter nach Anspruch 1, bei dem den einzelnen Rast- und Schaltstellungen Wertigkeiten (0 bis 47 bzw. 63) einer (binären) Codierung (M) zugeordnet sind.

3. Schalter nach Anspruch 1 oder 2, dessen Rastkörper (7) zylinderförmig mit einer der Anzahl der Anschlüsse (E,A) entsprechenden Anzahl von entlang der Drehachse (12) nebeneinander liegenden Funktionsebenen (Fₙ) ausgebildet ist.

4. Schalter nach Anspruch 3, bei dem jedem als Eingangsanschluss (E) ausgebildeten Rastelement (4,5) eine Funktionsebene (F₁,F₂) mit einer umfangsseitigen Zahnung (8a,8b) zugeordnet ist, wobei die im Bogenmaß einem ganzzahligen Bruchteil des Kreisumfangs entsprechende Zahnung eine entsprechende Anzahl von Schaltstellungen vorgibt, zwischen denen das Rastelement (4,5) und der Rastkörper (7) in elektrisch kontaktlosem Zustand sind.

5. Schalter nach Anspruch 4, bei dem bei zwei als Eingangsanschlüsse (E) ausgebildeten Rastelementen (4,5) die diesen zugeordneten Funktionsebenen (F₁,F₂) eine zueinander versetzte Zahnung (8a,8b) aufweisen, wobei die Zahnung (8a,8b) jeder der beiden Funktionsebenen (F₁,F₂) der halben Anzahl der Schaltstellungen entspricht derart, dass je Schaltstellung lediglich ein Rastelement (4,5) elektrisch leitend mit dem Rastkörper (7) in Wirkeingriff ist.

6. Schalter nach einem der Ansprüche 2 bis 5, bei dem jedem Ausgangsanschluss (A) eine Funktionsebene (Fₙ) mit einer der Codierung entsprechenden Wertigkeit derart zugeordnet ist, dass ausgehend von der Wertigkeit w = 1 den weiteren Ausgangsanschlüssen (A) die Wertigkeiten w = 2ⁿ, 2ⁿ⁺¹, .... 2^{n+m} mit n = 1 zugeordnet sind.

7. Schalter nach einem der Ansprüche 1 bis 5, bei dem jeder Ausgangsanschluss (A) als Rast- oder Schleifkontaktelement (6) ausgebildet ist.

8. Schalter nach Anspruch 7, bei dem der Rastkörper (7) ein zylinderförmiger Walzenkörper ist, der in Umfangsrichtung entsprechend einer Codierungsmatrix (M) mit Isolierflächen (I) alternierende Kontaktflächen (K) aufweist, zu denen das dem jeweiligen Ausgangsanschluß (A) zugeordnete Kontaktelement (6) positioniert ist.

9. Schalter nach Anspruch 7 oder 8, bei dem der Rastkörper (7) aus einer Anzahl von zylinderförmigen Walzenscheiben (10) gebildet ist, zu denen jeweils mindestens eines der Kontaktelemente (6) positioniert ist.

10. Verwendung eines Schalters nach einem der Ansprüche 1 bis 9 als 48-stelliger oder 64-stelliger Codierdrehschalter.

## Claims

1. Switch, in particular a coding switch, having a latching body (7) which can rotate about a rotation axis (12), for setting a large number of switch positions, and having at least one input connection (E) as well as a number of output connections (A) **characterized in that**
- the input connection (E) is in the form of a latching element (4, 5) which is coupled to the latching body (7), and
- **in that** the latching body (7) is designed to be electrically conductive such that an electrical connection is produced between the input connection (E) and the respective output connection (A) corresponding to the switch position setting, in every latching position, via the latching body (7).

2. Switch according to Claim 1 in which the individual latching and switching positions have associated values (0 to 47 and 63) of a (binary) coding (M).

3. Switch according to Claim 1 or 2, whose latching body (7) is cylindrical with a number, corresponding to the number of connections (E, A), of functional levels (Fₙ) which are located alongside one another along the rotation axis (12).

4. Switch according to Claim 3, in which each latching element (4, 5) which is in the form of an input connection (E) has an associated functional level (F₁, F₂) with a tooth system (8a, 8b) on the circumference, with the tooth system, whose pitch corresponds to an integer fraction of the circumference of the circle, predetermining a corresponding number of switch positions, between which the latching element (4, 5) and the latching body (7) make no electrical contact.

5. Switch according to Claim 4, in which, if there are two latching elements (4, 5) in the form of input connections (E), the functional levels (F₁, F₂) which are associated with them have a mutually offset tooth system (8a, 8b) with the tooth system (8a, Bb) for each of the two functional levels (F₁, F₂) corresponding to half the number of switch positions, such that only one latching element (4, 5) is electrically conductively operatively connected to the latching body (7) in each switch position.

6. Switch according to one of Claims 2 to 5, in which each output connection (A) has an associated functional level (Fₙ) with a value which corresponds to the coding, such that, starting from the value w = 1, the other output connections (A) are allocated the values w = 2ⁿ, 2ⁿ⁺¹, ... 2^{n+m} where n = 1.

7. Switch according to one of Claims 1 to 5, in which each output connection (A) is in the form of a latching or sliding contact element (6).

8. Switch according to Claim 7, in which the latching body (7) is a cylindrical roller body, which has contact surfaces (K) that alternate with insulating surfaces (I) in the circumferential direction in accordance with a coding matrix (M), with respect to which contact surfaces (K) the contact element (6) which is associated with the respective output connection (A) is positioned.

9. Switch according to Claim 7 or 8, in which the latching body (7) is formed from a number of cylindrical roller disks (10), with respect to which at least one of the contact elements (6) is in each case positioned.

10. Use of a switch according to one of Claims 1 to 9, as a 48-position or 64-position rotary coding switch.

## Revendications

1. Commutateur, notamment commutateur de codage, comportant un corps d'encliquetage (7) pouvant tourner autour d'un axe de rotation (12) pour le réglage d'une multiplicité de positions du commutateur, et au moins une borne d'entrée (31) ainsi qu'un certain nombre de bornes de sortie (A), **caractérisé en ce que**
- la borne d'entrée (R) est agencée sous la forme d'un élément d'encliquetage (4, 5) couplé au corps d'encliquetage (7), et
- que le corps d'encliquetage (7) est agencé de manière à être électriquement conducteur de telle sorte que dans chaque position d'encliquetage une liaison électrique est établie au moyen de ce corps, en fonction de la position de commutation réglée, entre la borne d'entrée (E) et la borne de sortie respective (A).

2. Commutateur selon la revendication 1, dans lequel des valeurs (0 à 47 ou 63) d'un codage (binaire) (M) sont associées aux différentes positions d'encliquetage et de commutation.

3. Commutateur selon la revendication 1 ou 2, dont le corps d'encliquetage (16) est réalisé avec une forme cylindrique comportant un nombre de plans fonctionnels (F_{N}) disposés côte-à-côte le long de l'axe de rotation (12), qui correspond au nombre des bornes (E, A).

4. Commutateur selon la revendication 3, dans lequel le plan fonctionnel (F₁, F₂) comportant une denture circonférentielle (8a, 8b) est associé à chaque élément d'encliquetage (4, 5) agencé sous la forme d'une borne d'entrée (E), la denture, qui correspond à la mesure d'arc d'une fraction entière de la circonférence circulaire, prédéterminant un nombre correspondant de positions de commutation, entre lesquelles l'élément d'encliquetage (4, 5) et le corps d'encliquetage (7) sont dans un état sans contact électrique.

5. Commutateur selon la revendication 4, dans lequel dans le cas de deux éléments d'encliquetage (4, 5) agencés sous la forme de bornes (E), et qui comportent des dentures (8a, 8b) décalées l'une par rapport à l'autre dans ces plans fonctionnels associés (F₁, F₂), la denture (8a, 8b) de chacun des deux plans fonctionnels (F₁, F₂) correspondant à la moitié du nombre des positions de commutation de telle sorte que pour chaque position de commutation, un seul élément d'encliquetage (4, 5) coopère d'une manière électriquement conductrice avec le corps d'encliquetage (7).

6. Commutateur selon l'une des revendications 2 à 5, dans lequel un plan fonctionnel (F₁) possédant une valeur correspondant au codage est associé à chaque borne de sortie (A) de telle sorte qu'à partir de la valeur w = 1, les valeurs w = 2ⁿ, 2ⁿ⁺¹, ... 2^{n+m} avec n = 1 sont associées aux autres bornes de sortie (A).

7. Commutateur selon l'une des revendications 1 à 5, dans lequel chaque borne de sortie (A) est agencée sous la forme d'un élément de contact à encliquetage ou d'un élément de contact coulissant (6).

8. Commutateur selon la revendication 7, dans lequel le corps d'encliquetage (7) est un corps de forme cylindrique, qui comporte dans la direction circonférentielle, conformément à une matrice de codage (M), des surfaces de contact (K), qui alternent avec des surfaces isolantes (I) et par rapport auxquelles est positionné l'élément de contact (6) qui est associé à la borne de sortie respective (A).

9. Commutateur selon la revendication 7 ou 8, dans lequel le corps d'encliquetage (7) est formé par un certain nombre de disques de forme cylindrique (10), par rapport auxquels est positionné respectivement au moins l'un des éléments de contact (6).

10. Utilisation d'un commutateur selon l'une des revendications 1 à 9, en tant que commutateur rotatif de codage à 48 positions ou à 64 positions.
